# EUROPÄISCHE PATENTSCHRIFT

(11) **EP 1 526 629 B1**
(45) Veröffentlichungstag und Bekanntmachung des Hinweises auf die Patenterteilung: **22.10.2008**
(21) Anmeldenummer: 04105214.3
(22) Anmeldetag: 21.10.2004
(51) Int. Cl.: H02K 9/02, H02K 9/04, H02K 9/06

(54) **Elektromotor mit Luftführung**
Electrical motor with air flow guidance
Moteur électrique avec un guidage d'air

(30) Priorität: 23.10.2003 DE 10349205
(43) Veröffentlichungstag der Anmeldung: 27.04.2005
(73) Patentinhaber: HILTI Aktiengesellschaft, 9494 Schaan (LI)
(72) Erfinder: Burger, Helmut, 82272, Moorenweis (DE); Schwarz, Hansjörg, 86916, Kaufering (DE); Schmiddunser, Peter, 86947, Weil (DE); Lübkert, Ernst-Rudolf, 86899, Landsberg (DE)
(74) Vertreter: Wildi, Roland

(56) Entgegenhaltungen:
- EP-A- 1 309 074
- DE-C- 4 415 915
- GB-A- 149 284

## Beschreibung

Die Erfindung bezeichnet einen luftgekühlten Elektromotor, vorzugsweise in einer Handwerkzeugmaschine, mit einer Luftführung.

Der Stator eines Elektromotors ist zur Vermeidung von Wirbelstromverlussten im magnetischen Wechselfeld aus axial übereinander gestapelten Blechlamellen zusammengesetzt. Diese notwendig diskrete Anzahl dieser Blechlamellen führt bei der Montage des Stators zu diskreten Längen, wodurch die Längentoleranz bei minimal einer Blechlamelle von ca. 0,5 mm liegt.

Zur Abführung der beim Betrieb des Elektromotors entstehenden Wärme wird bei kompakten Elektromotoren, wie sie vorzugsweise in Handwerkzeugmaschinen verwendet werden, ein Kühlluftstrom durch den zwischen dem Stator und dem Rotor ausgebildeten Luftspalt geleitet, der von einem auf der Rotorwelle montierten Lüfterrad erzeugt wird. Zur Steigerung des Wirkungsgrades wird das Lüfterrad über eine geeignet geformte Luftführung mit einer Wirbelwand bewegt, wobei ein kritisches, axial enges Spaltmass zum Lüfterrad einzuhalten ist. Bereits geringe Änderungen um +/- 0,2 mm des mit ca. 1.0 mm engen axialen Spaltmasses bewirken starke Schwankungen von +/- 50% des erzeugten Luftstromes, was zu unterschiedlichen Kühlverhaltem innerhalb einer Geräteserie führt.

Die GB149284 offenbart einen dem Elektromotor separat zugeordneten Lüfter, dessen Lüfterrad nicht an dem Rotor des Elektromotors angeordnet ist. Zudem ist eine ausschliesslich am Gehäuse festgelegte, segmentweise koaxial um den Stator des Elektromotors umlaufend verteilte Wirbelwand vorhanden, die zum direkt am Gehäuse festgelegten Stator einen Spalt ausbildet. Die Wirbelwand liefert selbst keinen Beitrag zur Festlegung des Stators.

Nach der DE4220078A1 ist vor dem Lüfterrad eine, ein Vordrillgitter ausbildende, ringförmige Luftführung ausschliesslich am Maschinengehäuse einer Handwerkzeugmaschine festgelegt. Eine Festlegung des Stators mittels der Luftführung kann somit nicht erfolgen.

Nach der US5343101 ist hinter dem Lüfterrad eine ringförmige Luftführung aus Plastik mit Schrauben an einem Rotorlagerschild befestigt, welches am Maschinengehäuse festgelegt ist und Innengewindebuchsen für Schraubbolzen zur Befestigung des Stators ausbildet. Eine definierte Lage der einseitig frei auskragenden Wirbelwand zum Lüfterrad ist nicht gegeben.

Nach der DE2617860 ist vor dem Lüfterrad ein als ringförmige Luftführung wirkender, eigensteifer Aufnahmering angeordnet, welche am Maschinengehäuse festgelegt ist und Innengewindebuchsen für Schraubbolzen zur Befestigung des Stators ausbildet. Bei der Verspannung des Stators bewirkt dessen axiale Statortoleranz vermittelt über den eigensteifen Aufnahmering eine Veränderung des kritischen, axial engen Spaltmasses zum Lüfterrad.

Die Aufgabe der Erfindung besteht in der Realisierung einer zusätzlich der Festlegung des Stators dienenden Luftführung zwischen Rotor und Lüfterrad mit einem von der Statortoleranz unabhängigem Spaltmass zum Lüfterrad.

Die Aufgabe wird im Wesentlichen durch die Merkmale des Anspruchs 1 gelöst. Vorteilhafte Weiterbildungen ergeben sich aus den Unteransprüchen.

So weist ein luftgekühlter Elektromotor mit einem, in einem Maschinengehäuse befestigten, Stator und einem um eine Achse drehbaren Rotor, an dem ein Lüfterrad angeordnet ist, zwischen diesem und dem Rotor eine ringförmige Luftführung mit einer Wirbelwand auf, die ein axial enges Spaltmass zum Lüfterrad ausbildet, wobei die Luftführung sowohl einen zur Wirbelwand formsteifen axialen Gehäuseanschlag als auch ein axial federnd versetzbares Fixierungsmittel mit einem gleichsinnigen Statoranschlag und einem Verspannmittel ausbildet.

Durch die Entkopplung des zur Festlegung des Stators im Maschinengehäuse dienenden Fixierungsmittels mit dem Statoranschlag und dem Verspannmittel von dem zur exakten axialen Positionierung der Luftführung dienenden Gehäuseanschlag ist das Spaltmass zum Lüfterrad unabhängig von der Statortoleranz.

Vorteilhaft ist die Wirbelwand rotationssymmetrisch ausgebildet, wodurch das Spaltmass bei der Rotation des Lüfterrades konstant bleibt.

Vorteilhaft ist das federnd versetzbare Fixierungsmittel über eine Blattfeder mit der Wirbelwand verbunden, weiter vorteilhaft an einem radial innenliegenden Verbindungspunkt, wodurch bei einer einteiligen Ausbildung der Luftführung technologisch einfach ein radial aussenliegendes, axial federnd versetzbares Fixierungsmittel realisierbar ist.

Vorteilhaft ist das Verspannmittel als achsparalleles Innengewinde ausgebildet, in welches ein Spannbolzen einschraubbar ist, wodurch der Stator von der dem Lüfterrad abgewandten Seite über den Spannbolzen verspannbar ist.

Vorteilhaft sind genau zwei Verspannmittel vorhanden, die weiter vorteilhaft diametral zur Drehachse angeordnet sind, wodurch resultierende Biegemomente bei der Verspannung des Stators im Maschinengehäuse unterbunden werden.

Die Erfindung wird bezüglich eines vorteilhaften Ausführungsbeispiels näher erläutert mit einer Darstellung als Längsschnitt eines spiegelsymmetrischen Elektromotors.

Nach der Darstellung weist ein luftgekühlter Elektromotor 1 einen, in einem Maschinengehäuse 2 befestigten, Stator 3 und einen um eine Achse A drehbaren Rotor 4 auf, an dem ein Lüfterrad 5 angeordnet ist. Zwischen diesem Lüfterrad 5 und dem Rotor 4 ist eine ringförmige Luftführung 6 mit einer rotationssymmetrisch ausgebildeten Wirbelwand 7 angeordnet, die ein axial enges Spaltmass X zum Lüfterrad 5 ausbildet. Die einteilige Luftführung 6 bildet sowohl einen zur Wirbelwand 7 formsteifen axialen Gehäuseanschlag 8 als auch ein axial federnd versetzbares Fixierungsmittel 9 mit einem zum Gehäuseanschlag 8 gleichsinnigen Statoranschlag 10 und einem Verspannmittel in Form eines achsparallelen Innengewindes 11 für einen Spannbolzen 14 aus. Das federnd versetzbare Fixierungsmittel 9 ist über eine von der Luftführung 6 ausgeformte Blattfeder 12 an einem radial innenliegenden Verbindungspunkt 13 mit der Wirbelwand 7 verbunden. In das Innengewinde 11 sind von der dem Lüfterrad 5 abgewandten Seite her, zwei diametral gegenüberliegende das Maschinengehäuse 2 teilweise durchsetzende Spannbolzen 14 (wovon nur einer dargestellt ist) eingeschraubt, wodurch der Stator 3 zwischen einem Statorgegenanschlag 15 und dem Statoranschlag 10 biegespannungsfrei verspannt ist, wie mit Strich-Punkt-Linien dargestellt. Der an einem Luftführungsanschlag 16 des Maschinengehäuses 2 direkt anliegende Gehäuseanschlag 8 stellt unabhängig von einer axialen Versetzung V des Fixierungsmittels 9 ein definiertes Spaltmass X zum Lüfterrad 5 ein.

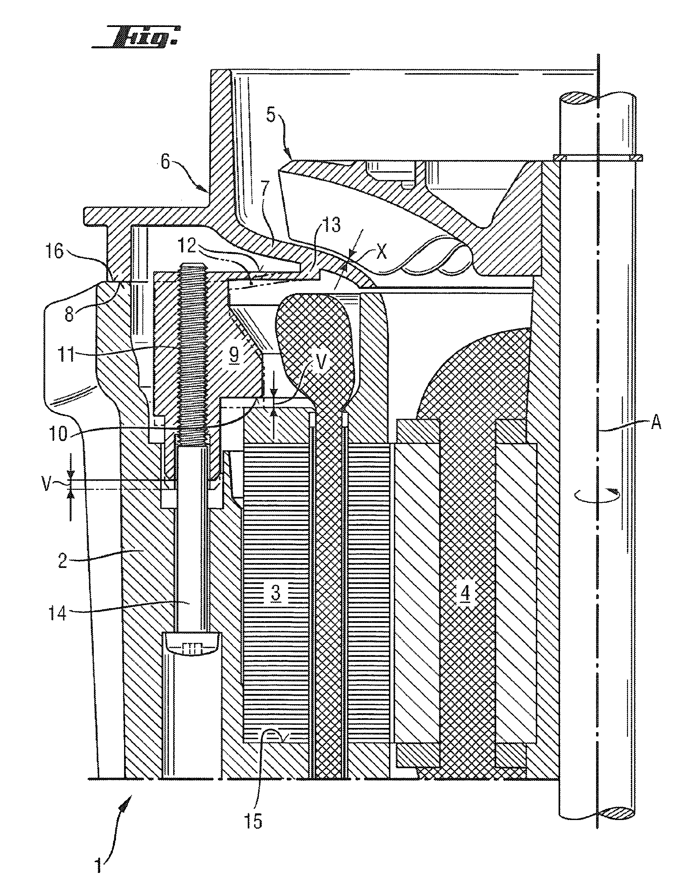

## Patentansprüche

1. Elektromotor mit einem, in einem Maschinengehäuse (2) befestigten, Stator (3) und einem um eine Achse (A) drehbaren Rotor (4), an dem ein Lüfterrad (5) angeordnet ist, zwischen dem und dem Rotor (4) eine ringförmige Luftführung (6) mit einer Wirbelwand (7) angeordnet ist, die ein axial enges Spaltmass (X) zum Lüfterrad (5) ausbildet, **dadurch gekennzeichnet, dass** die Luftführung (6) sowohl einen zur Wirbelwand (7) formsteifen axialen Gehäuseanschlag (8) als auch ein axial federnd versetzbares Fixierungsmittel (9) mit einem gleichsinnigen Statoranschlag (10) und einem Verspannmittel ausbildet.

2. Elektromotor nach Anspruch 1, **dadurch gekennzeichnet, dass** die Wirbelwand (7) rotationssymmetrisch ausgebildet ist.

3. Elektromotor nach Anspruch 1 oder 2, **dadurch gekennzeichnet, dass** das federnd versetzbare Fixierungsmittel (9) über eine Blattfeder (12) mit der Luftführung (6) verbunden ist.

4. Elektromotor nach Anspruch 3, **dadurch gekennzeichnet, dass** die Blattfeder (12) an einem radial innenliegenden Verbindungspunkt (13) mit der Wirbelwand (7) verbunden ist.

5. Elektromotor nach einem der vorherigen Ansprüche, **dadurch gekennzeichnet, dass** das Verspannmittel als achsparalleles Innengewinde (11) ausgebildet ist, in welches ein Spannbolzen (14) einschraubbar ist.

6. Elektromotor nach einem der vorherigen Ansprüche, **dadurch gekennzeichnet, dass** genau zwei Verspannmittel vorhanden sind, die optional diametral zur Drehachse (A) angeordnet sind.

## Claims

1. Electromotor with a stator (3), which is attached into a housing (2), and a rotor (4) that can rotate around the axis (A), on which a fan propeller (5) is disposed, between which and the rotor (4) an annular air-guide (6) with a turbulence partition (7) is disposed, the said turbulence partition (7) being formed with a gap (X) between it and the fan propeller (5), **characterized in that** the air guide (6) forms both an axially rigid abutment (8) in relation to the turbulence partition (7) and also an axially springy, displaceable attachment means (9) with a stator shoulder (10), which runs in the same direction, and a tensioning means.

2. Electromotor in accordance with claim 1, **characterized in that** the turbulence partition (7) is rotationally symmetrical.

3. Electromotor in accordance with claims 1 or 2, **characterized in that** the springy, displaceable attachment means (9) is connected to the air guide (6) by means of a plate spring (12).

4. Electromotor in accordance with claim 3, **characterized in that** the plate spring (12) is connected to the turbulence partition (7) at a radial, inner point (13) of connection.

5. Electromotor in accordance with one of the preceding claims, **characterized in that** the tensioning means is in the form of an inner screw thread (11) that runs parallel to its axis and into which a clamp bolt (14) can be screwed.

6. Electromotor in accordance with one of the preceding claims, **characterized in that** there are precisely two tensioning means, which can optionally be diametrically arranged in relation to the axis (A).

## Revendications

1. Moteur électrique comprenant un stator (3), fixé dans un carter d'appareil (2), et un rotor (4) qui tourne autour d'un axe (A) et sur lequel est disposée une roue de ventilation (5), entre celle-ci et le rotor (4) étant disposée une conduite d'air annulaire (6) avec une paroi de tourbillonnement (7) qui crée une dimension d'interstice axialement étroite (X) par rapport à la roue de ventilation (5), **caractérisé en ce que** la conduite d'air (6) crée aussi bien une butée de carter axiale indéformable (8) par rapport à la paroi de tourbillonnement (7) qu'un moyen de blocage à déplacement élastique axial (9) pourvu d'une butée de stator de même sens (10) et d'un moyen de serrage.

2. Moteur électrique selon la revendication 1, **caractérisé en ce que** la paroi de tourbillonnement (7) est conformée avec une symétrie de révolution.

3. Moteur électrique selon la revendication 1 ou 2, **caractérisé en ce que** le moyen de blocage à déplacement élastique axial (9) est relié à la conduite d'air (6) par l'intermédiaire d'un ressort à lame (12).

4. Moteur électrique selon la revendication 3, **caractérisé en ce que** le ressort à lame (12) est relié à la paroi de tourbillonnement (7) en un point de jonction radialement intérieur (13).

5. Moteur électrique selon une des revendications précédentes, **caractérisé en ce que** le moyen de serrage est conformé en taraudage parallèle axialement (11) dans lequel peut être vissé un goujon de serrage (14).

6. Moteur électrique selon une des revendications précédentes, **caractérisé en ce qu'**il est prévu exactement deux moyens de serrage qui sont disposés optionnellement diamétralement par rapport à l'axe de rotation (A).
